# EUROPÄISCHE PATENTSCHRIFT

(11) **EP 1 241 116 B1**
(45) Veröffentlichungstag und Bekanntmachung des Hinweises auf die Patenterteilung: **02.08.2006**
(21) Anmeldenummer: 02005842.6
(22) Anmeldetag: 14.03.2002
(51) Int. Cl.: B65G 17/06, B65G 17/08, B60S 3/00

(54) **Plattenförderer zum Bewegen von Lasten**
Plate conveyor for moving loads
Convoyeur à plaques pour le déplacement de charges

(30) Priorität: 15.03.2001 DE 20104463 U
(43) Veröffentlichungstag der Anmeldung: 18.09.2002
(73) Patentinhaber: Otto Christ AG, 87734 Benningen (DE)
(72) Erfinder: Christ, Otto, 87700 Memmingen (DE)
(74) Vertreter: Ernicke, Klaus Stefan

(56) Entgegenhaltungen:
- EP-A- 0 017 165
- US-A- 1 537 444
- US-A- 1 794 182
- US-A- 1 877 584
- US-A- 2 954 113

## Beschreibung

Die Erfindung bezieht sich auf einen Plattenförderer zum Bewegen von Fahrzeugen durch Fahrzeugwaschanlagen oder dergleichen, mit den Merkmalen im Oberbegriff des Hauptanspruchs.

Die US-A-1 794 182 zeigt einen solchen Plattenförderer für Fahrzeuge in Fahrzeugwaschanlagen oder Polieranlagen, der aus mehreren gelenkig aneinander gelagerten Platten besteht, die eine umlaufende Kette bilden. Die Platten sind zur Aufnahme der Fahrzeuglast sowohl im Bereich der Förderebene als auch im rücklaufenden Trum mit Hilfe von drehbar an den Platten gelagerten Rollen auf ortsfesten Schienen abgestützt. Die Rollen sind auf Gelenkbolzen außenseitig gelagert, welche an den Platten angeformte Lageraugen durchgreifen. Die Lageraugen sind an den Stirnseiten der Platten zueinander seitlich derart versetzt, dass die Lageraugen benachbarter Platten ineinander greifen können und die Platten durch den Gelenkbolzen gelenkig miteinander verbunden werden können. In den Umlenkbereichen der Kette werden die Platten über Umlenkräder geführt, die an ihrem Umfang halbkreisförmige Vertiefungen zum Eingriff an jeweils einem innenliegenden Auges der Platten aufweisen und zum Antrieb der Kette dienen.

Die US-A-1 877 584 zeigt einen ähnlichen Plattenförderer, der für Fahrzeugwaschanlagen oder für die Fahrzeugwartung eingesetzt wird. Die gelenkig miteinander verbundenen Platten besitzen an den Verbindungsstellen Gelenkbolzen mit außenseitigen Laufrollen, welche auf ortsfesten Schienen rollen und sich abstützen.

Aus der DE-A-20 17 089 und der DE-C-37 32 542 ist es bekannt, bei Autowaschstraßen Schleppketten zur Beförderung der Fahrzeuge einzusetzen. Das Fahrzeug wird mit Hilfe von endlos umlaufenden Rollenmitnehmern geschleppt, die gegen die Fahrzeugräder wirken. Hierbei bedarf es einer seitlichen Führung für die Fahrzeugräder, damit das Fahrzeug nicht seitlich ausweichen kann. Diese Führung können starre Schienen oder eine offen laufende Schleppkette übernehmen.

Die DE 914 478 zeigt einen Plattenbandförderer, der für den bergmännischen Untertagebetrieb bestimmt ist. Der Förderer soll in beliebigen Kurven verlegbar sein, wobei sowohl das vorlaufende Trum, wie auch das rücklaufende Trum für die Förderung benutzbar sein soll. Der Plattenförderer ist nach Art eines Schuppenbandes ausgebildet, wobei die einzelnen Platten einander überlappen und mit ihren Vorderenden an ein mittleres, endlos umlaufendes Zugmittel zweiachsig schwenkbar angelenkt sind. Die einzelnen Platten sind zur Aufnahme der im Bergbau anfallenden Schüttgüter als dünnwandige flache Schalen ausgebildet. Der Schalenboden ist an der Unterseite über Laufrollen abgestützt, die sich wahlweise am Plattenboden oder an einem Führungsgestell befinden.

Ein anderer Plattenförderer für Stückgüter ist aus der DE-A 31 04 262 bekannt. Er besteht aus mehreren Platten, die einzeln mit einem endlos umlaufenden Seil verbunden sind, das als Antriebsmittel dient. Die Platten gleiten dabei an nach innen gerichteten Flanschen, die mit einem Stoß absorbierenden Kunststoffbelag aus einem Werkstoff mit einem niedrigen Reibungskoeffizienten überzogen sind.

Die Aufgabe der Erfindung besteht darin, eine bessere Fördereinrichtung für Fahrzeuge in Autowaschstraßen oder dergleichen aufzuzeigen.

Die Erfindung löst diese Aufgabe mit den Merkmalen im Hauptanspruch 1.
Der beanspruchte Plattenförderer eignet sich besonders zum Bewegen von Fahrzeugen in Autowaschanlagen. Ein anderer bevorzugter Bereich sind Montagebänder in der Fahrzeugfertigung.

Der beanspruchte Plattenförderer ist einfach gestaltet und in der Lage, große Lasten voran zu bewegen, wobei die einzelnen Kettenglieder frei von Lastaufnahmen sein können.

Ein solcher Plattenförderer ist für die unterschiedlichsten Einsatzmöglichkeiten geeignet. Im Falle der Anwendung bei einer Autowaschstraße ersetzt der obere Trum des Plattenförderers die Fahrspur, über die die Fahrzeugräder einer Fahrzeugseite bewegbar sein müssen, um durch die Waschstraße zu gelangen. Das Fahrzeug wird ganz einfach auf den stehenden oder bereits im Umlauf befindlichen Plattenförderer aufgefahren und gegen Relativbewegung zum Plattenförderer gesichert. Dies geschieht beispielsweise dadurch, dass einzelne Platten mit Mitnehmern versehen sein können, welche gegen mindestens ein Fahrzeugrad wirken, um beim Auftreffen gegen rotierende Waschbürsten eine konstante Vorschubgeschwindigkeit zu behalten.

Bei anderen Anwendungsfällen des Plattenförderers kann auf solche Mitnehmer verzichtet werden, wenn gesichert ist, dass zwischen der einzelnen Last und der Platte eine genügend große Mitnahmereibung besteht.

So können vorzugsweise Montagebänder in Fertigungsbetrieben nach Art der erfindungsgemäßen Plattenförderer ausgebildet werden.

Beim beanspruchten Plattenförderer sind die einzelnen Platten untereinander gelenkig verbunden, was auf direktem Wege über Plattenlager geschieht. Die Platten bilden hierdurch ein endlos umlaufendes Fördermittel, welches über Umlenkräder geführt wird und an diesen Stellen auch angetrieben werden kann. Hierbei erfolgt der Antrieb durch einen formschlüssigen Eingriff direkt an den Platten. Ein solcher Plattenförderer ist hoch belastbar und zugleich sehr flexibel, so dass er auch engen Krümmungsradien folgen kann und einen geringen Platzbedarf hat. Für eine möglichst enge gegenseitige Anbindung der Platten zur Bildung einer durchgehenden Förderfläche sind die Platten direkt untereinander durch Plattenlager mit angepassten Lagerflächen und gegenseitiger formschlüssiger Führung verbunden. Dies ist besonders auch im Krümmungs- und Umlenkbereich an den Umlenkrädern von Vorteil, weil hier keine Spalte zwischen den einzelnen Platten auftreten. Dies ist vor allem für Autowaschstraßen im Einlaufbereich bedeutsam, weil hierdurch die Reifen und Platten geschont werden können. Zudem ist ein solcher Plattenförderer weniger empfindlich gegen Umwelteinflüsse. Dies gilt insbesondere für Autowaschstraßen mit den dort herrschenden Umgebungsbedingungen mit Nässe, Schmutz, Reinigungsmitteln und dergleichen.

Ein Plattenförderer mit direkt miteinander verbundenen Platten hat außerdem Vorteile für die geschützte Anordnung und Lagerung der Mitnahmeeinrichtungen, die vorzugsweise als Gelenkbolzen bzw. hierauf frei drehbar angeordnete Lagerhülsen ausgebildet sind. Hierfür ist es außerdem günstig, die Platten als zumindest teilweise hohle Plattengehäuse auszubilden und die Befestigungsstellen für die Gelenkbolzen in diese Hohlräume zu verlegen, welche mit Deckeln dicht verschlossen werden.

In den Unteransprüchen sind einige vorteilhafte Ausführungsbeispiele und Varianten offenbart.

Um die einzelnen Platten über die Umlenkräder mitzunehmen, weisen diese im Umfang halbkreisförmige Vertiefungen zur Aufnahme und Mitnahme der Gelenkbolzen auf.

Es erweist sich als zweckmäßig, wenn auf den Gelenkbolzen Lagerhülsen drehbar gelagert sind, deren Umfang in die halbkreisförmigen Vertiefungen eingreift. Die Lagerhülsen sind gegenüber den feststehenden Gelenkbolzen in üblicher Weise dauerhaft geschmiert und beispielsweise durch O-Ringe gegen Staubeinwirkung geschützt.

Zum Transport größerer Lasten, d.h. Fahrzeuge, sind die einzelnen Platten zur Aufnahme der Last am Randbereich ihrer Unterseite abgestützt, was z.B. durch Rollen erfolgt, die längs der Förderstrecke angeordnet sind. Hierbei erweist es sich als besonders vorteilhaft, wenn die Unterseite der einzelnen Platte im Bereich der Rollenabstützung derart abgeschrägt ist, dass die Plattendicke von außen nach innen zunimmt. Dadurch wird in Folge des Eingriffes der Rollen eine Zentriertendenz geschaffen, derart, dass die Platten in ihrer vorbestimmten Vorschubrichtung verbleiben und seitlich nicht ausweichen können. Um diese Abstützung und Zentrierung zu erreichen, kann die einzelne Rolle auf einer schräg angeordneten Achse drehbar gelagert sein, derart, dass durch die schräge Rollenabstützung eine Zentrierung der Platten in Bezug auf die Mittelachse der Förderstrecke stattfindet. Alternativ kann die einzelne Rolle auch quer zur Längsachse der Förderebene der Platten gelagert und in ihrem Umfang konvex gewölbt oder kegelstumpfförmig in Anpassung an die schräge Abstützfläche der Platte ausgebildet sein.

Zwischen den Achsen und den Rollen ist zweckmäßigerweise eine Dauerschmierung vorgesehen.

Es erweist sich als zweckmäßig, die einzelne Platte als Kunststoff-Pressteil auszubilden, wodurch Kosteneinsparungen und Gewichtsreduzierungen erreicht werden. Es ist aber auch vorteilhaft, die Platte aus anderen Materialien, beispielsweise aus Leichtmetall herzustellen und insbesondere als zumindest teilweise hohles Plattengehäuse auszubilden.

Diese und weitere Merkmale der Erfindung ergeben sich aus den Zeichnungen. In diesen sind Merkmale der Erfindung schematisch und beispielsweise dargestellt. Es zeigen:
- Figur 1:: einen Querschnitt durch eine Platte mit Abstützung und Führung durch ein Umlenkrad,
- Figur 2:: eine seitliche Ansicht auf zwei Platten im Bereich der Förderstrecke (im verkleinerten Maßstab),
- Figur 3:: eine Alternative zu Figur 1 im Hinblick auf die Abstützung der Platte,
- Figur 4:: eine Seitenansicht auf eine Umlenkstelle im Einlaufbereich für den Plattenförderer,
- Figur 5:: eine Seitenansicht eines verkürzt dargestellten Plattenförderers,
- Figur 6:: eine Draufsicht auf den Plattenförderer gemäß Pfeil VI von Figur 5,
- Figur 7:: einen Querschnitt durch den Plattenförderer gemäß Pfeil VII von Figur 5,
- Figur 8:: eine Detailansicht der Laschenverbindung, die kein Teil der Erfindung ist, und
- Figur 9 bis 12:: verschiedene perspektivische Ansichten einer Ansführungsform der Platten des Plattenförderers der Erfindung.

Die Erfindung befasst sich mit einem Plattenförderer (28) zum Bewegen von Fahrzeugen in Autowaschstraßen oder in der Fahrzeugfertigung. Im letztgenannten Fall kann der Plattenförderer (28) zum Beispiel ein Montageband bilden.

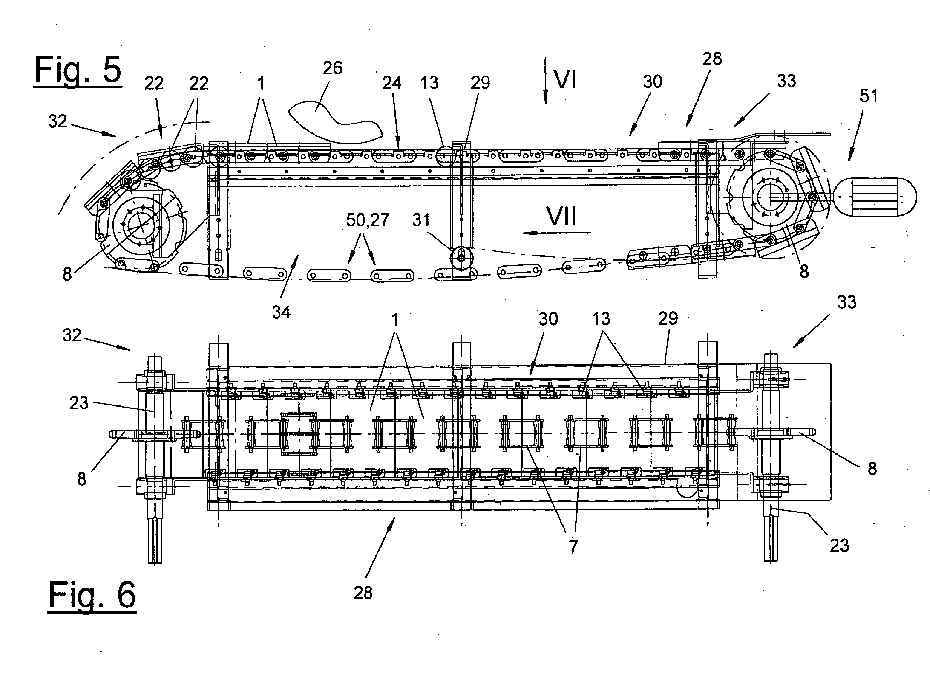

Figur 5 bis 7 zeigen einen Plattenförderer (28) in einer verkürzten Darstellung. In der Realität hat er meist eine wesentlich größere Länge. Der Plattenförderer (28) besteht aus einem Gestell (29), einer Vielzahl von untereinander gelenkig verbundenen Platten (1) und einem Antrieb (51), der die nach Art eines umlaufenden Fördermittels miteinander verbundenen Platten (1) in Bewegung setzt. Der Antrieb (51) weist hierfür einen schematisch dargestellten Motor und mehrere Umlenkräder (8) auf, über die die Platten (1) geführt und zumindest an einer Stelle auch angetrieben sind.

Der Plattenförderer (28) besitzt einen Einlaufbereich (32) und einen Auslaufbereich (33). Dazwischen erstreckt sich im Bereich des Obertrums eine Förderebene (24). Zumindest in diesem Bereich sind die Platten (1) an ihrer Plattenunterseite (2) über eine Führung (30) am Gestell (29) abgestützt. Hierfür haben die Platten (1) an der Plattenunterseite (2) im Außenbereich Stützflächen (35). Im Innenbereich ist eine Mitnahmeeinrichtung (50) zum lösbaren formschlüssigen Eingriff mit den Umlenkrädern (8) vorhanden. Die Platten (1) werden hierdurch beidseitig außen geführt und abgestützt sowie dazwischen im Innenbereich angetrieben.

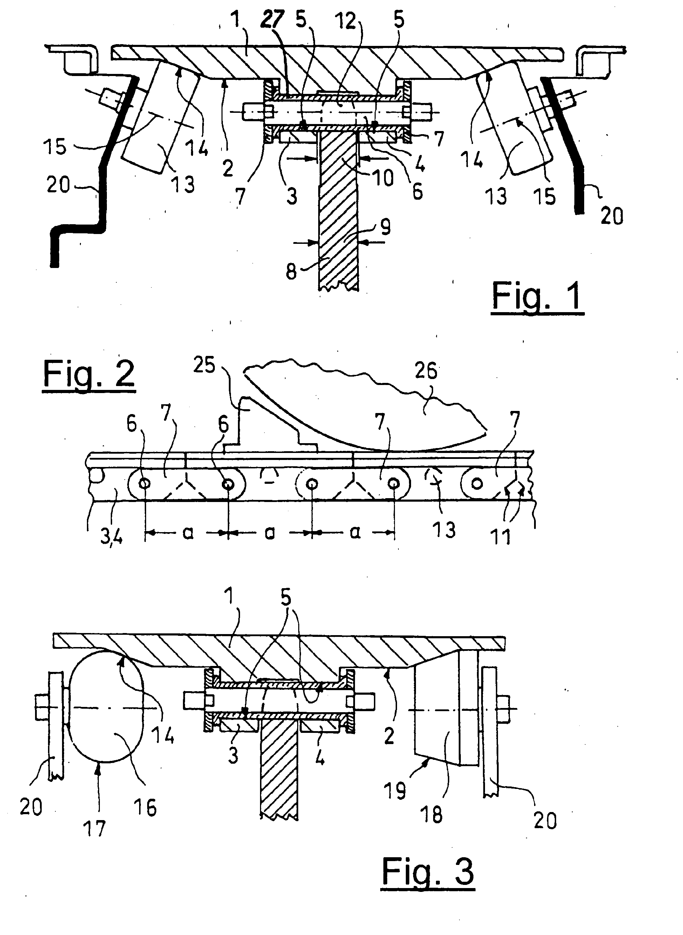

In Figur 1 ist eine Platte (1) im Querschnitt dargestellt. Sie weist an ihrer Plattenunterseite (2) axiale und in Förderrichtung sich parallel erstreckende Stege (3,4) auf, in denen sich Bohrungen (5) zur Aufnahme von quer liegenden Gelenkbolzen (6) befinden.

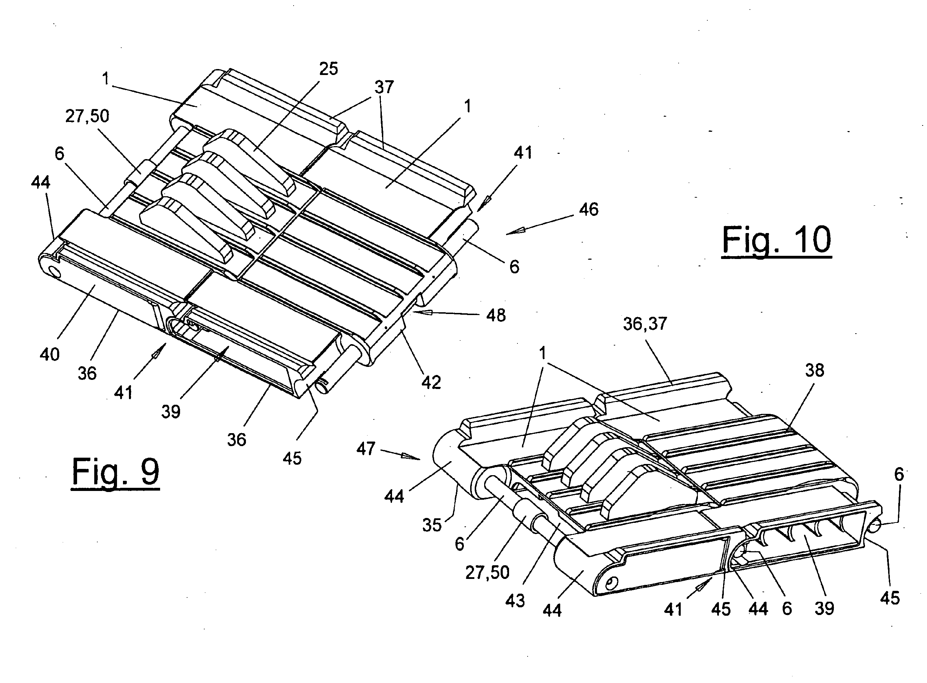

Bevorzugt können die Platten (1) als Kunststoff-Pressteile ausgebildet sein, was aber nicht ausschließt, die Platten (1) aus anderen Materialien, beispielsweise Leichtmetall herzustellen. Dies können z.B. Aluminium-Gußteile sein. Die Platten (1) können gemäß Figur 1 bis 7 als Massivteile oder gemäß Figur 9 bis 12 als zumindest teilweise hohle Plattengehäuse '(36) ausgebildet sein.

In Figur 1 sind die Gelenkbolzen (6) ortsfest angeordnet und von einer Lagerhülse (27) umgriffen, die auf den Gelenkbolzen (6) frei drehbar gelagert ist.

Wie Figur 2 zeigt, sind an den Gelenkbolzen (6) Laschen (7) gelenkig gelagert, welche benachbarte Platten (1) miteinander verbinden. Dieses Verbindungsmittel der Platten ist kein Teil der Erfindung.

Die Schmierung kann in üblicher Weise durch die Gelenkbolzen (6) axial erfolgen, wobei Schmierstoff-Taschen in den Lagerflächen vorgesehen werden können.

Die Förderkette wird somit abwechselnd durch starre Stegbereiche (3,4) und gelenkig daran gelagerte Laschen (7) gebildet. Die Abstände (a) der Stegbohrungen und der Laschenbohrungen sind gleich groß, wie in Figur 2 dargestellt.

Die zwei Stege (3,4) sind in Distanz zueinander angeordnet sind. Der einzelne Gelenkbolzen (6) mit seiner Lagerhülse (27) durchgreift diese Distanz und bietet dadurch die Möglichkeit, von einem Umlenkrad (8) mitgenommen zu werden, das zwischen die Stege (3,4) eingreift. Deshalb ist der Abstand (10) der Stege (3,4) größer als die Breite (9) des Umlenkrades (8).

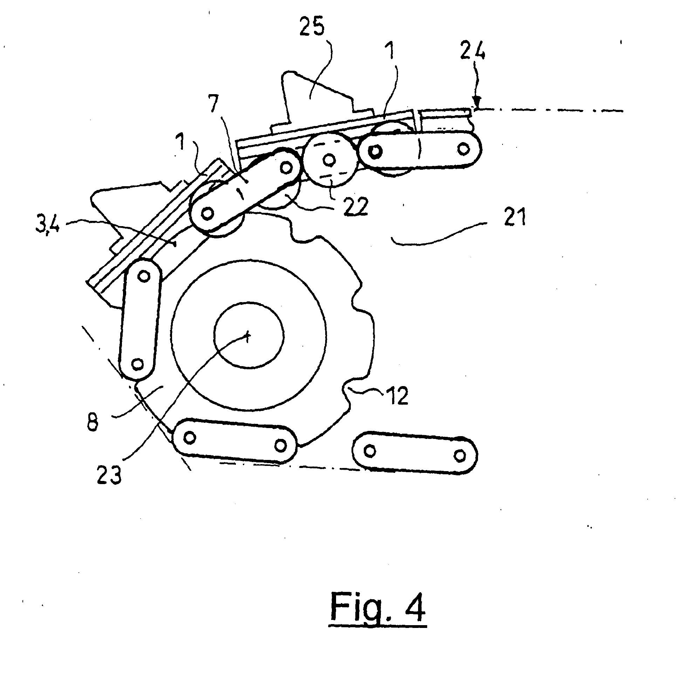

Wie die Figur 4 zeigt, sind im Umlenkrad (8) am Außenumfang Vertiefungen (12) angeordnet, in welche die Gelenkbolzen (6) bzw. die Lagerhülsen (27) eingreifen. Der Bogenabstand der Vertiefungen entspricht dem Bogenabstand der Gelenkbolzen (6). Die Ränder der Vertiefungen (12) sind abgerundet, um ein einwandfreies Eingleiten der Gelenkbolzen (6) bzw. der Lagerhülsen (27) in die Vertiefungen (12) zu ermöglichen.

In Figur 1 ist ferner gezeigt, dass die Laschen (7), die kein Teil der Erfindung sind, jeweils an den Außenflächen der Stege (3,4) angeordnet sind, um zwischen den Stegen (3,4) freien Raum für den Eingriff des Umlenkrades (8) zu gewährleisten.

Die Stege (3,4) sind - wie Figur 2 zeigt - an ihren vorderen und rückwärtigen Enden mit abgeschrägten Stirnflächen (11) versehen, welche einen Freiraum bilden, um die Platten (1) in großen Winkelbereichen umzulenken.

Einzelne Platten (1) können an ihrer Oberseite mit Mitnehmern (25) verbunden sein, die im Falle der Anwendung auf Fahrzeugwaschstraßen gegen Fahrzeugräder (26) wirken und diese schiebend mitnehmen. Diese Mitnehmer (25) können aus reibungstechnischen Gründen auch als Rollen ausgebildet sein.

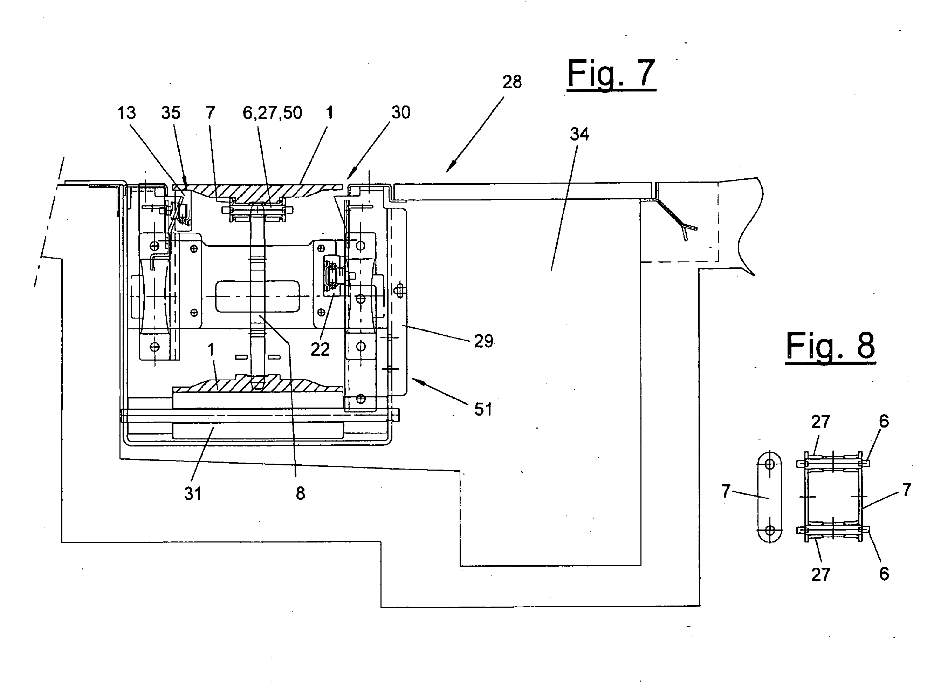

An der Plattenunterseite (2) sind, wie Figur 1 und 7 zeigen, außenseitig Abschrägungen (14) vorgesehen, welche eine Verdickung der Platte (1) von der Außenseite zur Mitte bedingen. Im Bereich dieser Abschrägungen (14) greifen Rollen (13) ein, die die eingangs erwähnte Führung (30) bilden und eine Abstützung der Platte (1) im Förderbereich ermöglichen. Durch die schräge Abstützung wird zugleich erreicht, die Platte (1) im zentrierten Mittelzustand zu halten. Die Rollen (13) sind hierbei an abgekröpften Gestellwänden (20) gelagert.

Alternativ können die Stützrollen (13) eine horizontale Drehachse aufweisen und im horizontalen Plattenbereich neben den Abschrägungen (14) angreifen, wie dies Figur 7 verdeutlicht. In einer weiteren nicht dargestellten Variante mit kinematischer Umkehr können die Rollen sich an den Platten befinden und auf einer stationären Laufbahn oder Führung abwälzen.

Der axiale Abstand der Rollen (13) in der Förderstrecke entspricht höchstens der Länge der einzelnen Platte (1), wodurch gesichert werden soll, dass im Bereich der Förderstrecke (24) jede Platte abgestützt ist und damit keine Belastung auf die Gelenke zwischen den Gelenkbolzen (6) und den Laschen (7) erfolgt.

Die Rollen (13) sind abgedichtet auf ortsfesten Rollenbolzen gelagert und geschmiert.

Alternativ kann hierzu gemäß Figur 3 auch eine andere Form der Rollenabstützung eingesetzt werden. Im linken Teil der Figur 7 wird eine Rolle (16) mit konvexer Wölbung (17) des Umfanges gezeigt, die an einer nicht abgekröpften Gestellwand (20) gelagert ist und deren Umfang (17) gegen die Abschrägung (14) an der Plattenunterseite (2) angreift. Damit wird aber eine mehr linienförmige Abstützung erreicht, die zweckmäßigerweise bei geringeren Lasten eingesetzt werden sollte.

Im rechten Teil der Figur 3 ist eine Rolle (18) mit kegelstumpfförmigem Umfang (19) gezeigt, die ebenfalls an einer nicht abgekröpften Gestellwand (20) gelagert ist. Hier entstehen Querkräfte, die über den Gelenkbolzen aufzunehmen sind.

Im Beispiel der Figur 4 und 5 ist eine Umlenkstelle für den Plattenförderer (28) gezeigt. Man sieht, dass die Lage der Umlenkachse (23) wesentlich tiefer als die Förderebene (24) des Plattenförderers liegt. Dazwischen befindet sich ein Übergangsbereich (21), der ebenfalls eine durch mehrere Stützrollen (22) gebildete Führung (30) aufweist. Dadurch soll ein sanfter Übergang vom Umlenkrad (8) in die Förderebene (24) gebildet werden, wobei schon in diesem Übergangsbereich (21) Lasten aufgenommen werden können, was beispielsweise beim Auffahren von Fahrzeugen im Einlaufbereich (32) in einer Fahrzeugwaschanlage vorkommt. Diese Stützrollen (22) brauchen nicht auf die Abschrägung (14) der einzelnen Platte (1) einzuwirken sondern können die seitlich daran in Richtung zum Rand der Platte (1) angrenzende Unterfläche (2) abstützen.

Wie Figur 5 verdeutlicht, ist das im Einlaufbereich (32) angeordnete Umlenkrad (8) tiefer als das im Auslaufbereich (33) befindliche Umlenkrad (8) angeordnet. Die Höhendifferenz wird durch den vorgenannten Übergangsbereich (21) ausgeglichen. Auf der Auslaufseite (33) laufen die Platten (1) am Obertrum direkt auf das dortige Umlenkrad (8) auf. Die Plattenkette verschwindet dabei unter einer Deckplatte, auf der die Fahrzeugräder (26) ausgangseitig aufrollen können. Zwischen den beiden Umlenkrädern (8) kann am Untertrum eine Spanneinrichtung (31) im Gestell (29) angeordnet sein. Dies können zum Beispiel ein oder mehrere gegebenenfalls verstellbare und federnd belastete Spannrollen sein.

Figur 7 zeigt in einem Querschnitt die Anordnung des Plattenförderers (28) im Boden einer Autowaschanlage. Der Plattenförderer (28) ist in einem Schacht (34) untergebracht, wobei lediglich die Platten (1) im Bereich des Obertrums bzw. der oben liegenden Förderebene (24) nach außen treten und bündig mit der Oberseite des Hallenbodens abschließen. Im Einlaufbereich (32) kann hierbei eine schwenkbare Klappe oder dergleichen angeordnet sein, um die aus dem Schacht (34) nach oben wandernden Platten (1) austreten zu lassen.

Figur 9 bis 12 zeigen eine Ausführungs form der Platten des Plattenförderers der Erfindung.

Die Platten (1) sind in diesem Fall als Plattengehäuse (36) ausgebildet, die an den Seitenbereichen Hohlräume (39) mit Versteifungsrippen aufweisen, die durch aufgesetzte Deckel (40) dicht verschlossen werden können.

Die Plattenlager (41) werden durch die besagten Gelenkbolzen (6) und durch gegenseitig angepasste, aneinander grenzende, konzentrisch zu den Gelenkbolzen (6) gerundete und ineinander greifende Lagerflächen (42,43,44,45) gebildet. Hierdurch können sich die Platten (1) gegenseitig um die sie verbindenden Gelenkbolzen (6) drehen.

Die einzelnen Platten (1) sind hierbei gleichartig ausgebildet und besitzen jeweils an einer Seite, vorzugsweise der Vorderseite (46), einen inneren axialen Lagervorsprung (42) mit einer konvex und konzentrisch um die Querbolzenachse gerundeten Außenwandung. Außenseitig schließen an den inneren Lagervorsprung (42) äußere Lageraufnahmen (45) an, die konzentrisch zur Gelenkbolzenachse konkav gewölbt sind. An der anderen Seite, vorzugsweise der Rückseite (47), haben die Platten (1) eine zurückspringende innere Lageraufnahme (43), in welche der innere Lagervorsprung (42) der benachbarten Platte (7) formschlüssig eingreift. An die innere Lageraufnahme (43) schließen sich an beiden Seiten außenliegende äußere axiale Lagervorsprünge (44) an, welche ihrerseits mit den vorerwähnten äuβeren Lageraufnahmen (45) der Nachbarplatte zusammenwirken. Auch hier haben die äußeren Lagervorsprünge (44) eine konvex und konzentrisch zur Querbolzenachse gebogene Wandung. Die innere Lageraufnahme (43) kann ebenfalls eine konkav und konzentrisch zur Querbolzenachse gewölbte Wandung besitzen. In der vereinfachten Ausführungsform kann die innere Lageraufnahme (43) aber auch als einfacher Plattenausschnitt gebildet sein. Der Querbolzen (6) durchsetzt die ineinander greifenden Lagervorsprünge (42,44) und die zurück versetzten Lageraufnahmen (43,45).

Der innere Lagervorsprung (42) kann in der Mitte eine Ausnehmung (48) aufweisen, in der vorzugsweise die Lagerhülse (27) angeordnet ist. Die Ausnehmung (48) ist als Schlitz ausgebildet und ermöglicht den Eingriff der Umlenkräder (8) mit ihren Vertiefungen (12). Die innere Lageraufnahme (43) kann ebenfalls eine zusätzliche Ausnehmung aufweisen.

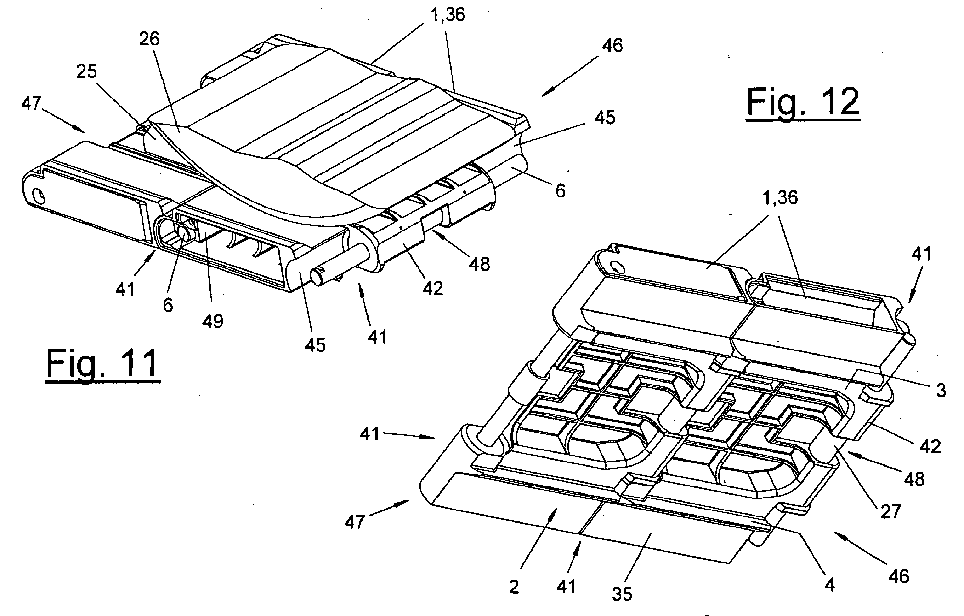

In den Hohlräumen (39) der Plattengehäuse (36) können Ansätze (49) vorhanden sein, durch die die Gelenkbolzen (6) gesteckt werden, wobei die Ansätze (49) eine axiale Abstützung für Sprengringe oder andere Befestigungsmittel der Gelenkbolzen (6) bilden. Figur 11 verdeutlicht diese Ausführungsform. Diese Befestigungs- oder Lagerstelle wird durch den Deckel (40) verschlossen.

Die Platten (1) können im inneren Bereich relativ dünnwandig ausgebildet sein. An der Plattenoberseite können längs laufende Rippen (38) und gegebenenfalls auch die Mitnehmer (25) vorhanden sein. An der Plattenunterseite (2) können diese relativ dünnen Plattenbereiche durch Quer- und Längsstege verstärkt und versteift sein. Figur 12 zeigt diese Ausführungsform.

Im Bereich der seitlichen Hohlräume (39) haben die Plattengehäuse (36) eine größere Dicke. In diesem Bereich befinden sich an der Plattenunterseite die Stützflächen (35), mit denen die Platten (1) auf der stationären Führung (30) und insbesondere den Stützrollen (13,16,18,22) geführt sind. An der Plattenoberseite können beidseitig Seitenführungen (37) in Form von hochstehenden axialen Leisten vorhanden sein, die gegebenenfalls im Bereich der Plattenlager (41) gegeneinander abgeschrägt sind. Die Seitenführungen (37) bieten einen seitlichen Halt für die Fahrzeugräder (26). Die Fahrzeugräder (26) können hierbei auf den vorerwähnten Rippen (38) im mittleren Plattenbereich und gegebenenfalls auch an den auf der Oberseite der Hohlräume (39) befindlichen Plattenrandbereichen aufliegen und abgestützt werden.

Wie Figur 12 verdeutlicht, können die Platten (1) an der Unterseite (2) ebenfalls axiale Stege (3,4) aufweisen, die hier allerdings weiter beabstandet sind als im ersten beschriebenen Plattenförderer von Figur 1 bis 8 und die als Seitenführung auf den Stützrollen (13,16,18,22) dienen können.

Abwandlungen der gezeigten Ausführungsformen sind in verschiedener Weise möglich. Zum einen kann die Formgebung der Platten (1) und ihre Verbindungstechnik abgewandelt werden. Hierbei lässt sich auch die formschlüssige Verbindung zwischen den Umlenkrädern (8) und den Mitnahmeeinrichtungen (50) an den Platten (1) umkehren, indem die Umlenkräder (8) zahnartige Vorsprünge besitzen, die in entsprechende Ausnehmungen an den Platten (1) greifen. Variabel sind ferner die Ausbildung des Gestells (29) und der Führung (30). Im weiteren können die in den verschiedenen Ausführungsbeispielen gezeigten Einzelmerkmale beliebig miteinander vertauscht oder in anderer Weise kombiniert werden.

### BEZUGSZEICHENLISTE

- 1: Platte
- 2: Plattenunterseite
- 3: Steg
- 4: Steg
- 5: Bohrung in Steg
- 6: Gelenkbolzen
- 7: Lasche
- 8: Umlenkrad
- 9: Dicke des Umlenkrades
- 10: Abstand der Stege
- 11: Stirnfläche des Steges
- 12: Vertiefung im Umlenkrad
- 13: Rolle
- 14: Abschrägung an Plattenunterseite
- 15: schräge Achse
- 16: Rolle
- 17: konvexe Wölbung
- 18: Rolle
- 19: kegelstumpfförmiger Umfang
- 20: Gestellwand
- 21: Übergangsbereich
- 22: Stützrolle
- 23: Umlenkachse, Radachse
- 24: Förderebene
- 25: Mitnehmer
- 26: Fahrzeugrad
- 27: Lagerhülse
- 28: Plattenförderer
- 29: Gestell
- 30: Führung
- 31: Spanneinrichtung, Spannrolle
- 32: Einlaufbereich
- 33: Auslaufbereich
- 34: Schacht
- 35: Stützfläche, Stützbereich der Platte
- 36: Plattengehäuse
- 37: Seitenführung
- 38: Rippe
- 39: Hohlraum
- 40: Deckel
- 41: Plattenlager
- 42: Lagerfläche, innerer Lagervorsprung
- 43: Lagerfläche, innere Lageraufnahme
- 44: Lagerfläche, äußerer Lagervorsprung
- 45: Lagerfläche, äußere Lageraufnahme
- 46: Vorderseite
- 47: Rückseite
- 48: Ausnehmung
- 49: Ansatz
- 50: Mitnahmeeinrichtung
- 51: Antrieb

## Patentansprüche

1. Plattenförderer zum Bewegen von Fahrzeugen in Fahrzeugwaschanlagen oder dgl., der ein Gestell (29) mit einem Antrieb (51) und eine Reihe aufeinander folgender Platten (1) aufweist, wobei die Platten (1) zur Aufnahme der Lasten zumindest im Bereich der Förderebene (24) an einer ortsfesten Führung (30) am Gestell (29) abgestützt sind, wobei die Platten (1) unter Bildung eines umlaufenden Fördermittels untereinander unmittelbar durch Plattenlager (41) mit Gelenkbolzen (6) gelenkig verbunden und über zumindest zum Teil angetriebene Umlenkräder (8) geführt sind, wobei die Platten (1) im Innenbereich eine Mitnahmeeinrichtung (50) zum lösbaren formschlüssigen Eingriff mit den Umlenkrädern (8) aufweisen, wobei die Plattenlager (41) Lagerflächen (42,43,44,45) aufweisen, **dadurch**
**gekennzeichnet, dass** die Platten (1) an der Plattenunterseite (2) im Außenbereich Stützflächen (35) für die Führung (30) aufweisen und die Lagerflächen als gegenseitig angepasste, axiale formschlüssig ineinander greifende konvexe Lagervorsprünge (42,44) und konkave Lageraufnahmen (43,45) ausgebildet sind.

2. Plattenförderer nach Anspruch 1, **dadurch gekennzeichnet, dass** die Lagerflächen (42, 43, 44, 45) aneinander grenzen konzentrisch zum Gelenkbolzen (6) und gerundet sind.

3. Plattenförderer nach Anspruch 1 oder 2, **dadurch gekennzeichnet, dass** die Platten (1) an einer Seite (46) zwei äußere Lageraufnahmen (45) und einen inneren Lagervorsprung (42) und an der anderen Seite (47) zwei äußere Lagervorsprünge (44) und eine innere Lageraufnahme (43) aufweisen.

4. Plattenförderer nach Anspruch 3, **dadurch gekennzeichnet, dass** die äußeren Lagervorsprünge (44) Lageraufnahmen (45) eine konvex und konzentrisch zum Gelenkbolzen (6) gebogene Wandung haben, die aüβeren konzentrisch zum Gelenkbolzen (6) konkav gewölbt sind, der innere Lagervorsprung (42) eine konzentrisch zum Gelenkbolzen (6) gerundete Auβenwandung aufweist und die innere Lageraufnahme (43) als Plattenausschnitt ausgebildet ist.

5. Plattenförderer nach einem der vorhergehenden Ansprüche, **dadurch gekennzeichnet, dass** der Gelenkbolzen (6) die Lagervorsprünge (42,44) und die Lageraufnahmen (43,45) durchsetzt.

6. Plattenförderer nach einem der vorhergehenden Ansprüche, **dadurch gekennzeichnet, dass** die Mitnahmeeinrichtung (50) von den Gelenkbolzen (6) gebildet ist.

7. Plattenförderer nach Anspruch 6, **dadurch gekennzeichnet, dass** die Gelenkbolzen (6) eine frei drehbare Lagerhülse (27) aufweisen.

8. Plattenförderer nach einem der vorhergehenden Ansprüche, **dadurch gekennzeichnet, dass** die Platten (1) an ihrer Unterseite (2) eine Ausnehmung (48) am Plattenlager (41) zur Aufnahme der Mitnahmeeinrichtung (50) und zum Eingriff der Umlenkräder (8) aufweisen.

9. Plattenförderer nach Anspruch 7 und 8, **dadurch gekennzeichnet, dass** in der Ausnehmung (48) die Lagerhülse (27) angeordnet ist.

10. Plattenförderer nach einem der vorhergehenden Ansprüche 7-9 **dadurch gekennzeichnet, dass** die Umlenkräder (8) am Umfang halbkreisförmige Vertiefungen (12) zum formschlüssigen Eingriff mit den Lagerhülsen (27) aufweisen.

11. Plattenförderer nach einem der vorhergehenden Ansprüche, **dadurch gekennzeichnet, dass** die Führung (30) drehbare Stützrollen (13,16,18,22) aufweist.

12. Plattenförderer nach einem der vorhergehenden Ansprüche, **dadurch gekennzeichnet, dass** die Führung (30), vorzugsweise mit Stützrollen (22), auch zumindest teilweise im Umlenkbereich (21) vorhanden ist.

13. Plattenförderer nach einem der vorhergehenden Ansprüche 11 oder 12 **dadurch gekennzeichnet, dass** die Stützrollen (13,16,18,22) in einem axialen Abstand angeordnet sind, der gleich oder kleiner als die Plattenlänge ist.

14. Plattenförderer nach einem der vorhergehenden Ansprüche, **dadurch gekennzeichnet, dass** die Platten (1) an der Unterseite (2) im Bereich der Stützflächen (35) Abschrägungen (14) aufweisen, wobei die Plattendicke von außen nach innen zunimmt.

15. Plattenförderer nach einem der vorhergehenden Ansprüche 11-14, **dadurch gekennzeichnet, dass** die Stützrollen (13,16,18,22) auf einer schräg angeordneten Achse (15) drehbar gelagert sind, derart, dass durch die schräge Rollenabstützung eine Zentrierung der Platten (1) in Bezug auf die Mittelachse der Fördererstrecke stattfindet.

16. Plattenförderer nach einem der vorhergehenden Ansprüch 11-14, **dadurch gekennzeichnet, dass** die Stützrollen (16,18) quer zur Längsachse der Förderebene der Platten (1) gelagert und in ihrem Umfang konvex gewölbt (17) oder kegelstumpfförmig (19) in Anpassung an die schräge Abstützfläche (14) der Platte (1) ausgebildet sind.

17. Plattenförderers nach einem der vorhergehenden Ansprüche, **dadurch gekennzeichnet, dass** die einzelne Platte (1) als Kunststoff-Pressteil oder als Press- bzw. Gussteil aus Leichtmetall ausgebildet ist.

18. Plattenförderer nach einem der vorhergehenden Ansprüche, **dadurch gekennzeichnet, dass** die Platten (1) Plattengehäuse (36) mit Hohlräumen (39) und Deckeln (40) aufweisen.

19. Plattenförderer nach einem der vorhergehenden Ansprüche, **dadurch gekennzeichnet, dass** einzelne Platten (1) an ihrer Oberseite Mitnehmer (25) für ein Fahrzeugrad (26) aufweisen.

20. Plattenförderer nach einem der vorhergehenden Ansprüche, **dadurch gekennzeichnet, dass** die Platten (1) an der Oberseite seitliche leistenförmige Seitenführungen (37) aufweisen.

21. Plattenförderer nach einem der vorhergehenden Ansprüche, **dadurch gekennzeichnet, dass** die Platten (1) an der Oberseite längs laufende Rippen (38) aufweisen.

## Claims

1. Plate conveyor for moving vehicles in vehicle washing systems or the like, the plate conveyor having a framework (29) with a drive (51) and having a series of plates (1) following one another, the plates (1) for receiving the loads being supported, at least in the region of the conveying plane (24), on a positionally fixed guide (30) on the framework (29), the plates (1) being connected in an articulated manner to one another directly by means of plate bearings (41) with hinge pins (6), with an encircling conveying means being formed, and being guided via deflecting wheels (8), at least some of which are driven, the plates (1) having, in the inner region, a carry-along device (50) for the releasable interlocking engagement with the deflecting wheels (8), and the plate bearings (41) having bearing surfaces (42, 43, 44, 45), **characterized in that** the plates (1) have supporting surfaces (35) for the guide (30) in the outer region on the lower side (2) of the plates, and the bearing surfaces are designed as axial, convex bearing projections (42, 44), which are matched to each other and engage in each other in an interlocking manner, and concave bearing receptacles (43, 45).

2. Plate conveyor according to Claim 1, **characterized in that** the bearing surfaces (42, 43, 44, 45) are adjacent to one another and are rounded concentrically with respect to the hinge pin (6).

3. Plate conveyor according to Claim 1 or 2, **characterized in that** the plates (1) have two outer bearing receptacles (45) and an inner bearing projection (42) on one side (46) and two outer bearing projections (44) and an inner bearing receptacle (43) on the other side (47).

4. Plate conveyor according to Claim 3, **characterized in that** the outer bearing projections (44) have a wall which is curved convexly and concentrically with respect to the hinge pin (6), the outer bearing receptacles (45) are concavely curved concentrically with respect to the hinge pin (6), the inner bearing projection (42) has an outer wall rounded concentrically with respect to the hinge pin (6), and the inner bearing receptacle (43) is designed as a plate cutout.

5. Plate conveyor according to one of the preceding claims, **characterized in that** the hinge pin (6) passes through the bearing projections (42, 44) and the bearing receptacles (43, 45).

6. Plate conveyor according to one of the preceding claims, **characterized in that** the carry-along device (50) is formed by the hinge pins (6).

7. Plate conveyor according to Claim 6, **characterized in that** the hinge pins (6) have a freely rotatable bearing sleeve (27).

8. Plate conveyor according to one of the preceding claims, **characterized in that** the plates (1), on their lower side (2), have a recess (48) on the plate bearing (41) for receiving the carry-along device (50) and for engagement of the deflecting wheels (8).

9. Plate conveyor according to Claim 7 and 8, **characterized in that** the bearing sleeve (27) is arranged in the recess (48).

10. Plate conveyor according to one of the preceding Claims 7-9, **characterized in that** the deflecting wheels (8) have semicircular depressions (12) on the circumference for the interlocking engagement with the bearing sleeves (27).

11. Plate conveyor according to one of the preceding claims, **characterized in that** the guide (30) has rotatable supporting rollers (13, 16, 18, 22).

12. Plate conveyor according to one of the preceding claims, **characterized in that** the guide (30), preferably with supporting rollers (22), is also at least partially present in the deflecting region (21).

13. Plate conveyor according to either of the preceding Claims 11 and 12, **characterized in that** the supporting rollers (13, 16, 18, 22) are arranged at an axial distance which is equal to or smaller than the plate length.

14. Plate conveyor according to one of the preceding claims, **characterized in that** the plates (1), on the lower side (2), have bevels (14) in the region of the supporting surfaces (35), with the plate thickness increasing from the outside to the inside.

15. Plate conveyor according to one of the preceding Claims 11-14, **characterized in that** the supporting rollers (13, 16, 18, 22) are mounted rotatably on an obliquely arranged axis (15) in such a manner that, by means of the oblique roller support, a centring of the plates (1) with respect to the centre axis of the conveying section takes place.

16. Plate conveyor according to one of the preceding Claims 11-14, **characterized in that** the supporting rollers (16, 18) are mounted transversely to the longitudinal axis of the conveying plane of the plates (1) and, in their circumference, are curved convexly (17) or are of frustoconical design (19) to match the oblique supporting surface (14) of the plate (1).

17. Plate conveyor according to one of the preceding claims, **characterized in that** the individual plate (1) is designed as a plastic pressed part or a pressed or cast part of light metal.

18. Plate conveyor according to one of the preceding claims, **characterized in that** the plates (1) have plate housings (36) with cavities (39) and covers (40).

19. Plate conveyor according to one of the preceding claims, **characterized in that** individual plates (1), on their upper side, have drivers (25) for a vehicle wheel (26).

20. Plate conveyor according to one of the preceding claims, **characterized in that** the plates (1), on the upper side, have lateral strip-shaped side guides (37).

21. Plate conveyor according to one of the preceding claims, **characterized in that** the plates (1), on the upper side, have ribs (38) running longitudinally.

## Revendications

1. Convoyeur à plateaux pour le déplacement de véhicules dans des installations de lavage de véhicules ou analogues, qui comporte un bâti (29) pourvu d'un entraînement (51) et une série de plateaux (1) successifs, les plateaux (1) destinés à recevoir les charges étant soutenus au moins dans la région du plan (24) de transport sur un guide (30) à poste fixe sur le bâti (29), les plateaux (1) étant directement reliés entre eux de manière articulée, en formant un convoyeur circulant, par des paliers (41) de plateaux pourvus d'axes (6) d'articulation, et étant dirigés sur des roues (8) de renvoi au moins pour partie entraînées, les plateaux (1) comportant dans la région intérieure un organe (50) entraîneur pour l'engagement libérable à complémentarité de forme avec les roues (8) de renvoi, les paliers (41) de plateaux comportant des surfaces (42, 43, 44, 45) de palier, **caractérisé en ce que** les plateaux (1) comportent sur le dessous (2) des plateaux, dans la région extérieure, des surfaces (35) d'appui pour le guide (30), et les surfaces de palier sont réalisées sous la forme de saillies (42, 44) de palier convexes et de logements (43, 45) de palier concaves, axiaux et mutuellement adaptés, s'engageant entre eux à complémentarité de forme.

2. Convoyeur à plateaux suivant la revendication 1, **caractérisé en ce que** les surfaces (42, 43, 44, 45) de palier sont limitrophes, concentriques à l'axe (6) d'articulation et arrondies.

3. Convoyeur à plateaux suivant la revendication 1 ou 2, **caractérisé en ce que** les plateaux (1) comportent sur un côté (46) deux logements (45) de palier extérieurs et une saillie (42) de palier intérieur, et sur l'autre côté (47) deux saillies (44) de palier extérieures et un logement (43) de palier intérieur.

4. Convoyeur à plateaux suivant la revendication 3, **caractérisé en ce que** les saillies (44) de palier extérieures ont une paroi à courbure convexe et concentrique à l'axe (6) d'articulation, les logements (45) de palier extérieurs sont de courbure concave et concentrique à l'axe (6) d'articulation, la saillie (42) de palier intérieure a une paroi extérieure arrondie concentriquement à l'axe (6) d'articulation, et le logement (43) de palier intérieur est réalisé sous forme de découpure de plateau.

5. Convoyeur à plateaux suivant l'une des revendications précédentes, **caractérisé en ce que** le axe (6) d'articulation traverse les saillies (42, 44) de palier et les logements (43, 45) de palier.

6. Convoyeur à plateaux suivant l'une des revendications précédentes, **caractérisé en ce que** l'organe (50) entraîneur est formé par les axes (6) d'articulation.

7. Convoyeur à plateaux suivant la revendication 6, **caractérisé en ce que** les axes (6) d'articulation comportent une douille (27) de palier librement tournante.

8. Convoyeur à plateaux suivant l'une des revendications précédentes, **caractérisé en ce que** les plateaux (1) comportent sur leur dessous (2) un évidement (48) sur le palier (41) de plateau pour recevoir l'organe (50) entraîneur et pour l'engagement des roues (8) de renvoi.

9. Convoyeur à plateaux suivant les revendications 7 et 8, **caractérisé en ce que** la douille (27) de palier est disposée dans l'évidement (48).

10. Convoyeur à plateaux suivant l'une des revendications précédentes 7 à 9, **caractérisé en ce que** les roues (8) de renvoi comportent sur le pourtour des renfoncements (12) semi-circulaires pour l'engagement à complémentarité de forme avec les douilles (27) de palier.

11. Convoyeur à plateaux suivant l'une des revendications précédentes, **caractérisé en ce que** le guide (30) comporte des rouleaux (13, 16, 18, 22) de soutien rotatifs.

12. Convoyeur à plateaux suivant l'une des revendications précédentes, **caractérisé en ce que** le guide (30), de préférence doté de rouleaux (22) de soutien, est également présent au moins pour partie dans la région (21) de renvoi.

13. Convoyeur à plateaux suivant l'une des revendications précédentes 11 ou 12, **caractérisé en ce que** les rouleaux (13, 16, 18, 22) de soutien sont disposés à un écartement axial qui est inférieur ou égal à la longueur des plateaux.

14. Convoyeur à plateaux suivant l'une des revendications précédentes, **caractérisé en ce que** les plateaux (1) comportent sur le dessous (2) des biais (14) dans la région des surfaces (35) d'appui, l'épaisseur des plateaux augmentant de l'extérieur vers l'intérieur.

15. Convoyeur à plateaux suivant l'une des revendications précédentes 11 à 14, **caractérisé en ce que** les rouleaux (13, 16, 18, 22) de soutien sont montés à rotation sur un axe (15) disposé en oblique, de sorte que le soutien oblique des rouleaux engendre un centrage des plateaux (1) par rapport à l'axe médian du parcours du convoyeur.

16. Convoyeur à plateaux suivant l'une des revendications précédentes 11 à 14, **caractérisé en ce que** les rouleaux (16, 18) de soutien sont montés transversalement à l'axe longitudinal du plan de transport des plateaux (1) et sont réalisés tronconiques (19) ou à courbure (17) convexe sur leur pourtour, en adaptation à la surface (14) d'appui biaise du plateau (1).

17. Convoyeur à plateaux suivant l'une des revendications précédentes, **caractérisé en ce que** chaque plateau (1) est réalisé sous forme de pièce moulée par compression en matière plastique ou de pièce moulée ou emboutie à la presse en métal léger.

18. Convoyeur à plateaux suivant l'une des revendications précédentes, **caractérisé en ce que** les plateaux (1) comportent des carters (36) de plateaux pourvus de cavités (39) et de couvercles (40).

19. Convoyeur à plateaux suivant l'une des revendications précédentes, **caractérisé en ce que** les différents plateaux (1) comportent sur leur dessus des entraîneurs (25) pour une roue (26) de véhicule.

20. Convoyeur à plateaux suivant l'une des revendications précédentes, **caractérisé en ce que** les plateaux (1) comportent sur le dessus des guides (37) latéraux en forme de barres.

21. Convoyeur à plateaux suivant l'une des revendications précédentes, **caractérisé en ce que** les plateaux (1) comportent sur le dessus des nervures (38) s'étendant longitudinalement.
